# EUROPÄISCHE PATENTSCHRIFT

(11) **EP 3 102 449 B1**
(45) Veröffentlichungstag und Bekanntmachung des Hinweises auf die Patenterteilung: **01.01.2020**
(21) Anmeldenummer: 15700972.1
(22) Anmeldetag: 08.01.2015
(51) Int. Cl.: B60K 1/04, H01M 2/10

(54) **KOMPONENTENMONTAGESYSTEM MIT KOMPONENTENMODUL**
COMPONENT MOUNTING SYSTEM COMPRISING A COMPONENT MODULE
SYSTÈME DE MONTAGE DE COMPOSANT COMPORTANT UN MODULE DE COMPOSANT

(30) Priorität: 06.02.2014 DE 102014101461
(43) Veröffentlichungstag der Anmeldung: 14.12.2016
(73) Patentinhaber: Phoenix Contact GmbH & Co. KG, 32825 Blomberg (DE)
(72) Erfinder: HENKEL, Hartmut, 32825 Blomberg (DE); SCHMIDT, Stefan, 33104 Paderborn (DE)
(74) Vertreter: Patentship Patentanwaltsgesellschaft mbH
(86) Internationale Anmeldenummer: PCT/EP2015/050260
(87) Internationale Veröffentlichungsnummer: WO 2015/117789

(56) Entgegenhaltungen:
- EP-A1- 2 157 637
- DE-A1-102012 012 391
- US-A- 3 042 442
- US-A- 3 618 997
- US-A- 5 360 307
- US-A1- 2004 170 888

## Beschreibung

Die vorliegende Erfindung betrifft ein Komponentenmontagesystem mit einem einschiebbaren elektrischen Komponentenmodul.

Die Druckschrift EP 0 734 330 B1 betrifft ein Befestigungs- und Hebesystem für Batterien eines elektrischen Fahrzeuges mit einem um die Batterien herum befindlichen Riemen, mittels welchem die Batterien zu einem Batterie-Paket verbunden werden.

Die Druckschrift EP 2 157 637 A1 offenbart eine Speicherbatterie mit einem Klemmanschluss.

Die Druckschrift US 3,618,997 A offenbart eine Speicherbatterie mit einem Anschlussbolzen und ein Hebegerät für die Speicherbatterie.

Die Druckschrift DE 10 2012 012 391 A1 offenbart eine Aufnahme für Akkumulatoren.

Für den Wechsel von Batterien wird ein Gehäuse oftmals mit einem Werkzeug geöffnet, dass dann ungeeigneterweise für eine Entnahme der Batterien verwendet wird.

Es ist die der Erfindung zugrundeliegende Aufgabe, einen werkzeuglosen Austausch von elektrischen Komponenten zu ermöglichen.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß der Erfindung wird die Aufgabe durch ein Komponentenmontagesystem gelöst, mit einem elektrischen Komponentenmodul mit einem Aufsetzbolzen; einem Aufnahmekasten zum Einsetzen des Komponentenmoduls; und einer Auszugseinrichtung zum Herausziehen des Komponentenmoduls aus dem Aufnahmekasten, die eine Öffnung zum Aufsetzen der Auszugseinrichtung auf den Aufsetzbolzen des Komponentenmoduls umfasst. Dadurch wird beispielsweise der technische Vorteil erreicht, dass ein schneller Austausch des elektrischen Komponentenmoduls ermöglicht wird. Auf einen Hintergriff oder eine randoffene Ausnehmung kann verzichtet werden.

In einer vorteilhaften Ausführungsform des Komponentenmontagesystems umfasst die Auszugseinrichtung eine erste und eine zweite Öffnung. Dadurch wird beispielsweise der technische Vorteil erreicht, dass ein Kräftepaar auf das Komponentenmodul ausgeübt wird und ein Verkanten beim Herausziehen verhindert wird.

Die Auszugseinrichtung ist durch ein elastisches zungenförmiges Flachteil gebildet. Dadurch wird beispielsweise der technische Vorteil erreicht, dass die Auszugseinrichtung auf einfache Weise auf das Komponentenmodul aufgesetzt werden kann.

In einer weiteren vorteilhaften Ausführungsform des Komponentenmontagesystems ist die Auszugseinrichtung aus Kunststoff oder Gummi gebildet. Dadurch wird beispielsweise der technische Vorteil erreicht, dass sich die Auszugseinrichtung auf einfache Weise herstellen lässt.

In einer weiteren vorteilhaften Ausführungsform des Komponentenmontagesystems umfasst die Auszugseinrichtung eine Handöffnung zum manuellen Eingreifen in die Auszugseinrichtung. Dadurch wird beispielsweise der technische Vorteil erreicht, dass ein Abrutschen beim Ziehen der Auszugseinrichtung verhindert werden kann.

In einer weiteren vorteilhaften Ausführungsform des Komponentenmontagesystems umfasst die Auszugseinrichtung ein Oberflächenstrukturprofil zum Verhindern eines Abrutschens beim manuellen Ziehen der Auszugseinrichtung. Dadurch wird beispielsweise der technische Vorteil erreicht, dass eine hohe Kraft auf die Auszugseinrichtung ausgeübt werden kann.

In einer weiteren vorteilhaften Ausführungsform des Komponentenmontagesystems ist der Aufsetzbolzen an einer Oberseite des elektrischen Komponentenmoduls angeordnet. Dadurch wird beispielsweise der technische Vorteil erreicht, dass die Auszieheinrichtung in einfacher Weise von oben auf das Komponentenmodul aufgesetzt werden kann.

In einer weiteren vorteilhaften Ausführungsform des Komponentenmontagesystems ist der Aufsetzbolzen aus Metall gebildet. Dadurch wird beispielsweise der technische Vorteil erreicht, dass der Aufsetzbolzen eine hohe Stabilität aufweist.

In einer weiteren vorteilhaften Ausführungsform des Komponentenmontagesystems umfasst das Komponentenmodul einen ersten und einen zweiten Aufsetzbolzen. Dadurch wird beispielsweise der technische Vorteil erreicht, dass ein Herausziehen des Komponentenmoduls erleichtert wird. Selbst falls ein Aufsetzbolzen beschädigt sein sollte, kann das Komponentenmodul über den anderen Aufsetzbolzen herausgezogen werden.

In einer weiteren vorteilhaften Ausführungsform des Komponentenmontagesystems sind der erste und der zweite Aufsetzbolzen in einer Herausziehrichtung nebeneinander angeordnet. Dadurch wird beispielsweise der technische Vorteil erreicht, dass ein Kräftepaar auf das Komponentenmodul ausgeübt wird und ein Verkanten beim Herausziehen verhindert wird.

Der Aufsetzbolzen ist entgegen einer Herausziehrichtung gekrümmt. Dadurch wird beispielsweise der technische Vorteil erreicht, dass ein Abrutschen der Auszugseinrichtung verhindert wird.

In einer weiteren vorteilhaften Ausführungsform des Komponentenmontagesystems umfasst der Aufnahmekasten eine Tür zum Abdecken des Komponentenmoduls. Dadurch wird beispielsweise der technische Vorteil erreicht, dass eine Verschmutzung des Komponentenmoduls verhindert wird.

In einer weiteren vorteilhaften Ausführungsform des Komponentenmontagesystems verfügt die Auszugseinrichtung über ein ausgestanztes Bedien-Piktogramm. Dadurch wird beispielsweise der technische Vorteil erreicht, dass das Bedienpiktogramm von einem Benutzer dauerhaft erkannt werden kann.

In einer weiteren vorteilhaften Ausführungsform des Komponentenmontagesystems ist die elektrische Komponente eine quaderförmige Batterie. Dadurch wird beispielsweise der technische Vorteil erreicht, dass eine austauschbare Energieversorgung realisieret wird, bei der eine verbrauchte Batterie werkzeuglos durch eine unverbrauchte Batterie ersetzt werden kann.

In einer weiteren vorteilhaften Ausführungsform des Komponentenmontagesystems ist der Aufsetzbolzen durch einen Anschlusspol der Batterie gebildet. Dadurch wird beispielsweise der technische Vorteil erreicht, dass ein Aufsetzbolzen realisiert wird, der sowohl als Spannungsquelle als auch zum Herausziehen der Batterie verwendet werden kann. Ausführungsbeispiele der Erfindung sind in den Zeichnungen dargestellt und werden im Folgenden näher beschrieben.

Es zeigen:
- Fig. 1: eine Ansicht eines Aufnahmekastens;
- Fig. 2: eine Ansicht eines geöffneten Aufnahmekastens mit eingesetztem Komponentenmodul und einer Auszugseinrichtung; und
- Fig. 3: eine Ansicht des Komponentenmoduls mit der Auszugseinrichtung.

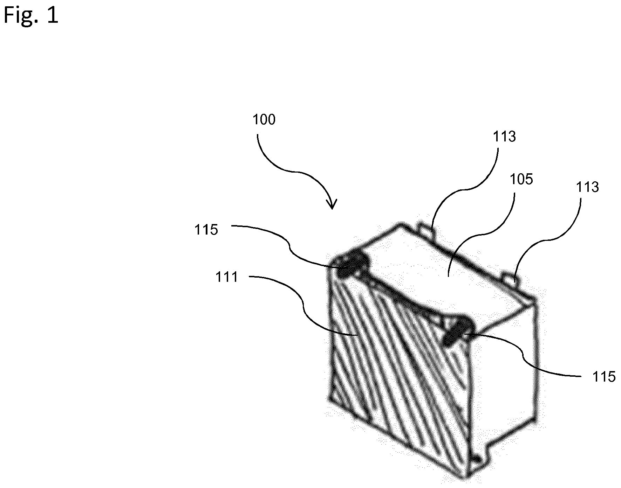

Fig. 1 zeigt eine Ansicht eines Komponentenmontagesystems 100 für elektrische Komponenten. Das Komponentenmontagesystem 100 umfasst einen Aufnahmekasten 105 zur Aufnahme der elektrischen Komponente. Der Aufnahmekasten 105 umfasst eine Wandbefestigungseinrichtung 113, durch die der Aufnahmekasten 105 an einer Wand befestigt werden kann. Der Aufnahmekasten 105 ist beispielsweise aus Kunststoff gebildet.

Die Vorderseite des Aufnahmekastens 105 ist mit einer aufklappbaren Tür 111 verschließbar. Die Tür 111 wird im geschlossenen Zustand durch eine Verrieglungseinrichtung 115 gehalten. Der Aufnahmekasten 105 kann eine elektronische Komponente mit zeitlich befristeter Brauchbarkeitsdauer beinhalten, die nach einem bestimmten Zeitraum ausgewechselt wird, wie beispielsweise eine Bleibatterie. Oftmals ist ein Auswechseln nur durch technisch geschultes Personal und unter zu Hilfenahme von Werkzeug möglich.

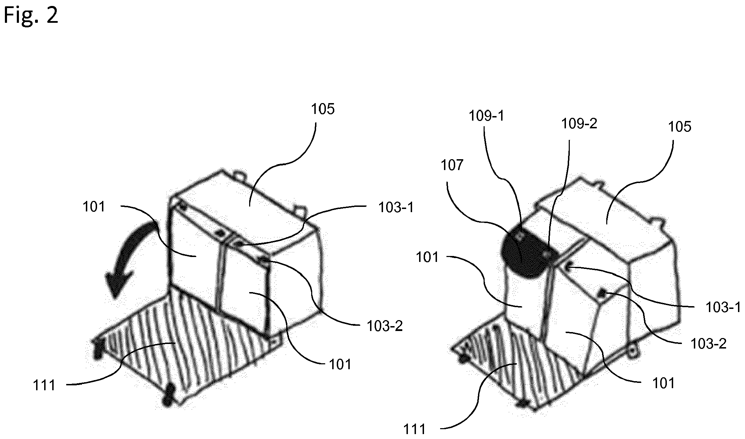

Fig. 2 zeigt eine Ansicht eines geöffneten Aufnahmekastens 105 mit eingesetztem Komponentenmodul 101 und einer Auszugseinrichtung 107. Die drehbar gelagerte Tür 111 ist nach Unten geklappt. Ein Öffnen des Aufnahmekastens 105 kann ohne Werkzeug erfolgen.

In dem Aufnahmekasten 105 befinden sich zwei herausziehbare elektrische Komponentenmodule 101. Jedes der Komponentenmodule 101 umfasst zwei Aufsetzbolzen 103-1 und 103-2, die an einer Oberseite des Komponentenmoduls 101 angeordnet sind und aus dem Komponentenmodul 101 herausragen. Die Aufsetzbolzen 103-1 und 103-2 sind von der Vorderseite des Aufnahmekastens 105 her zugänglich. Die Aufsetzbolzen 103-1 und 103-2 können beispielsweise durch einen Metallstift gebildet sein.

Zum Herausziehen des Komponentenmoduls 101 wird eine Auszugseinrichtung 107 mit zwei Öffnungen 109-1 und 109-2 verwendet, die von oben auf die Aufsetzbolzen 103-1 und 103-2 aufgesetzt wird. Durch ein Ziehen an der Auszugseinrichtung 107 wird das Komponentenmodul 101 aus dem Aufnahmekasten 105 gezogen. Die Kraft wird dabei über die beiden Öffnungen 109-1 und 109-2 auf die Aufsetzbolzen 103-1 und 103-2 übertragen.

Nach dem Öffnen des Aufnahmekastens 105 können die Komponentenmodule 101 einfach mit der Auszugseinrichtung 107 entnommen werden.

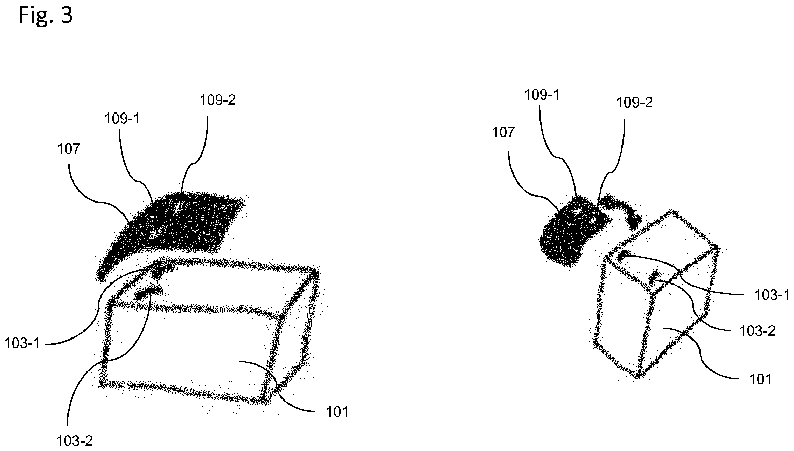

Fig. 3 zeigt eine Ansicht des Komponentenmoduls 101 mit der Auszugseinrichtung 107. Das Komponentenmodul 101 wird beispielsweise durch einen quaderförmigen Bleiakkumulator gebildet. Die Auszugseinrichtung 107 wird von Oben auf das Komponentenmodul 101 gesetzt.

Die beiden Aufsetzbolzen 103-1 und 103-2 sind entgegen einer Herausziehrichtung gekrümmt, so dass die aufgesetzte Auszugseinrichtung 107 bei Ziehen an die Oberseite des Komponentenmoduls 101 gedrückt wird und ein Abrutschen der Auszugseinrichtung 107 verhindert wird. Die Auszugseinrichtung 107 ist für andere Komponentenmodule 101 wiederverwendbar. Nach der Entnahme kann die Auszugseinrichtung 107 auf ein anderes Komponentenmodul 101 gesetzt werden, sodass die Auszugseinrichtung 107 bei einer erneuten Entnahme genutzt werden kann.

Aufgrund dieses Aufbaus kann die Auszugseinrichtung 107 ferner direkt vor dem Entnehmen des Komponentenmoduls angebracht werden. Ein Anbringen der Auszugseinrichtung 107 an dem Komponentenmodul 101 vor dem Einführen in den Aufnahmekasten 105 ist somit nicht notwendig.

Die Auszugseinrichtung 107 ist durch ein flexibles oder festes Kunstsoff- oder Gummiteil gebildet, in dem die beiden Öffnungen 109-1 und 109-2 gebildet sind. Die Position der Öffnungen 109-1 und 109-2 entspricht der Position der Aufsetzbolzen 103-1 und 103-2 auf dem Komponentenmodul 101. Die Auszugseinrichtung 107 weist einen abgewinkelten Vorderabschnitt zum manuellen Ausüben einer Zugkraft auf. Die Auszugseinrichtung 107 kann eine weitere Öffnung oder ein Oberflächenstrukturprofil zum Greifen der Auszugseinrichtung umfassen. Auf der Auszugseinrichtung 107 kann ein ausgestanztes Bedien-Piktogramm angeordnet sein.

Im Falle eines Bleiakkumulators als Komponentenmodul 101 können die Anschlusspole als Aufsetzbolzen 103-1 und 103-2 verwendet werden. Der Bleiakkumulator kann dann nach einer bestimmten Verwendungsdauer auf einfache Weise durch einen neuen Bleiakkumulator ausgetauscht und ersetzt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Komponentenmontagesystem
- 101: Komponentenmodul
- 103-1: Aufsetzbolzen
- 103-2: Aufsetzbolzen
- 105: Aufnahmekasten
- 107: Auszugseinrichtung
- 109-1: Öffnung
- 109-2: Öffnung
- 111: Tür
- 113: Wandbefestigungseinrichtung
- 115: Verriegelungseinrichtung

## Patentansprüche

1. Komponentenmontagesystem (100) mit:
einem elektrischen Komponentenmodul (101) mit einem Aufsetzbolzen (103-1, 103-2);
einem Aufnahmekasten (105) zum Einsetzen des Komponentenmoduls (101); und
**gekennzeichnet durch** eine Auszugseinrichtung (107) zum Herausziehen des Komponentenmoduls (101) aus dem Aufnahmekasten (105), die eine Öffnung (109-1, 109-2) zum Aufsetzen der Auszugseinrichtung (107) auf den Aufsetzbolzen (103-1, 103-2) des Komponentenmoduls (101) umfasst, wobei die Auszugseinrichtung (107) durch ein elastisches, zungenförmiges Flachteil gebildet wird, und wobei der Aufsetzbolzen (103-1, 103-2) entgegen einer Herausziehrichtung gekrümmt ist.

2. Komponentenmontagesystem (100) nach Anspruch 1, wobei die Auszugseinrichtung (107) eine erste und eine zweite Öffnung (109-1, 109-2) umfasst.

3. Komponentenmontagesystem (100) nach einem der vorangehenden Ansprüche, wobei die Auszugseinrichtung (107) aus Kunststoff oder Gummi gebildet ist.

4. Komponentenmontagesystem (100) nach einem der vorangehenden Ansprüche, wobei die Auszugseinrichtung (107) eine Handöffnung zum manuellen Eingreifen in die Auszugseinrichtung (107) umfasst.

5. Komponentenmontagesystem (100) nach einem der vorangehenden Ansprüche, wobei die Auszugseinrichtung (107) ein Oberflächenstrukturprofil zum Verhindern eines Abrutschens beim manuellen Ziehen der Auszugseinrichtung (107) umfasst.

6. Komponentenmontagesystem (100) nach einem der vorangehenden Ansprüche, wobei der Aufsetzbolzen (103-1, 103-2) an einer Oberseite des elektrischen Komponentenmodul (101) angeordnet ist.

7. Komponentenmontagesystem (100) nach einem der vorangehenden Ansprüche, wobei der Aufsetzbolzen (103-1, 103-2) aus Metall gebildet ist

8. Komponentenmontagesystem (100) nach einem der vorangehenden Ansprüche, wobei das Komponentenmodul (101) einen ersten und einen zweiten Aufsetzbolzen (103-1, 103-2) umfasst.

9. Komponentenmontagesystem (100) nach Anspruch 8, wobei der erste und der zweite Aufsetzbolzen (103-1, 103-2) in einer Herausziehrichtung nebeneinander angeordnet sind.

10. Komponentenmontagesystem (100) nach einem der vorangehenden Ansprüche, wobei der Aufnahmekasten (105) eine Tür (111) zum Abdecken des Komponentenmoduls (101) umfasst

11. Komponentenmontagesystem (100) nach einem der vorangehenden Ansprüche, wobei die Auszugseinrichtung (107) über ein ausgestanztes Bedien-Piktogramm verfügt.

12. Komponentenmontagesystem (100) nach einem der vorangehenden Ansprüche, wobei die elektrische Komponente (101) eine quaderförmige Batterie ist.

13. Komponentenmontagesystem (100) nach Anspruch 12, wobei der Aufsetzbolzen (103-1, 103-2) durch einen Anschlusspol der Batterie gebildet wird.

## Claims

1. A component mounting system (100) comprising:
an electrical component module (101) having a positioning bolt (103-1, 103-2);
a retaining case (105) for inserting the component module (101); and **characterized by**
an extraction device (107) for extracting the component module (101) from the retaining case (105), the extraction device having an opening (109-1, 109-2) for seating the extraction device (107) on the positioning bolt (103-1, 103-2) of the component module (101), wherein the extraction device (107) is formed by an elastic, tongue-shaped flat part, and wherein the positioning bolt (103-1, 103-2) is curved opposite to a direction of extraction.

2. The component mounting system (100) according to Claim 1, wherein the extraction device (107) has a first opening and a second opening (109-1, 109-2).

3. The component mounting system (100) according to one of the preceding claims, wherein the extraction device (107) is made of plastic or rubber.

4. The component mounting system (100) according to one of the preceding claims, wherein the extraction device (107) includes a hand opening for manually engaging with the extraction device.

5. The component mounting system (100) according to one of the preceding claims, wherein the extraction device (107) has a surface structure profile for preventing slippage when the extraction device (107) is manually pulled.

6. The component mounting system (100) according to one of the preceding claims, wherein the positioning bolt (103-1, 103-2) is situated on a top side of the electrical component module (101).

7. The component mounting system (100) according to one of the preceding claims, wherein the positioning bolt (103-1, 103-2) is made of metal.

8. The component mounting system (100) according to one of the preceding claims, wherein the component module (101) includes a first positioning bolt and a second positioning bolt (103-1, 103-2) .

9. The component mounting system (100) according to Claim 8, wherein the first and the second positioning bolts (103-1, 103-2) are situated next to one another in a direction of extraction.

10. The component mounting system (100) according to one of the preceding claims, wherein the retaining case (105) includes a door (111) for covering the component module (101).

11. The component mounting system (100) according to one of the preceding claims, wherein the extraction device (107) has a die-cut operation pictogram.

12. The component mounting system (100) according to one of the preceding claims, wherein the electrical component (101) is a cube-shaped battery.

13. The component mounting system (100) according to Claim 12, wherein the positioning bolt (103-1, 103-2) is formed by a terminal of the battery.

## Revendications

1. Système de montage de composant (100), comprenant :
un module de composant électrique (101) muni d'un boulon de pose (103-1, 103-2) ;
un carter de logement (105) pour insérer le module de composant (101) ; et
**caractérisé par** un dispositif d'extraction (107) pour retirer le module de composant (101) du carter de logement (105) et comprenant une ouverture (109-1, 109-2) pour poser le dispositif d'extraction (107) sur le boulon de pose (103-1, 103-2) du module de composant (101), dans lequel le dispositif d'extraction (107) est formé par une pièce plate élastique en forme de languette, et dans lequel le boulon de pose (103-1, 103-2) est courbé dans le sens contraire à la direction d'extraction.

2. Système de montage de composant (100) selon la revendication 1, dans lequel le dispositif d'extraction (107) comprend une première et une deuxième ouverture (109-1, 109-2) .

3. Système de montage de composant (100) selon l'une quelconque des revendications précédentes, dans lequel le dispositif d'extraction (107) est formé en matière plastique ou en caoutchouc.

4. Système de montage de composant (100) selon l'une quelconque des revendications précédentes, dans lequel le dispositif d'extraction (107) comprend une ouverture pour la main permettant d'introduire la main dans le dispositif d'extraction (107).

5. Système de montage de composant (100) selon l'une quelconque des revendications précédentes, dans lequel le dispositif d'extraction (107) comprend un profil de structure de surface pour empêcher tout dérapage lorsque le dispositif d'extraction (107) est retiré manuellement.

6. Système de montage de composant (100) selon l'une quelconque des revendications précédentes, dans lequel le boulon de pose (103-1, 103-2) est disposé sur une face supérieure du module de composant électrique (101).

7. Système de montage de composant (100) selon l'une quelconque des revendications précédentes, dans lequel le boulon de pose (103-1, 103-2) est formé en métal.

8. Système de montage de composant (100) selon l'une quelconque des revendications précédentes, dans lequel le module de composant (101) comprend un premier et un deuxième boulon de pose (103-1, 103-2).

9. Système de montage de composant (100) selon la revendication 8, dans lequel les premier et deuxième boulons de pose (103-1, 103-2) sont disposés côté à côte dans une direction d'extraction.

10. Système de montage de composant (100) selon l'une quelconque des revendications précédentes, dans lequel le carter de logement (105) comprend une porte (111) pour recouvrir le module de composant (101).

11. Système de montage de composant (100) selon l'une quelconque des revendications précédentes, dans lequel le dispositif d'extraction (107) dispose d'un pictogramme d'utilisation estampé.

12. Système de montage de composant (100) selon l'une quelconque des revendications précédentes, dans lequel le composant électrique (101) est une batterie parallélépipédique.

13. Système de montage de composant (100) selon la revendication 12, dans lequel le boulon de pose (103-1, 103-2) est formé par une borne de connexion de la batterie.
